(19) Europäisches Patentamt
European Patent Office
Office européen des brevets

(11) **EP 2 187 501 A1**

(12) **EUROPÄISCHE PATENTANMELDUNG**
veröffentlicht nach Art. 153 Abs. 4 EPÜ

(43) Veröffentlichungstag:
**19.05.2010 Patentblatt 2010/20**

(51) Int Cl.:
***H02J 17/00*** *(2006.01)*

(21) Anmeldenummer: **08779537.3**

(22) Anmeldetag: **17.07.2008**

(86) Internationale Anmeldenummer:
**PCT/UA2008/000044**

(87) Internationale Veröffentlichungsnummer:
**WO 2009/025631 (26.02.2009 Gazette 2009/09)**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **20.08.2007 UA 2007009441**

(71) Anmelder:
• **Kriuk, Vitalii Grigorovich**
**Kiev 03061 (UA)**
• **Iatsyshyn, Vitalii Anatoliiovych**
**Kiev 02217 (UA)**
• **Beldii, Mykola Mykolaiovych**
**Kiev 02097 (UA)**

(72) Erfinder:
• **Kriuk, Vitalii Grigorovich**
**Kiev 03061 (UA)**
• **Iatsyshyn, Vitalii Anatoliiovych**
**Kiev 02217 (UA)**
• **Beldii, Mykola Mykolaiovych**
**Kiev 02097 (UA)**

(74) Vertreter: **Jeck, Anton**
**Klingengasse 2**
**71665 Vaihingen/Enz (DE)**

(54) **DRAHTLOSE ELEKTRISCHE STROMÜBERTRAGUNGSEINRICHTUNG**

(57) Die Erfindung betrifft eine Einrichtung zur drahtlosen Energieübertragung mit Sender- und Empfängerantennen für elektrische Energie, wobei die Antennen in Form von Pseudosphären ausgebildet sind, auf deren Pseudohemisphären Induktionsspulen mit helikoidalen Rechts- und Linkswicklungen aufgewickelt sind, wobei die Spulen beim Sender untereinander und mit einem Stromerzeuger in Serie geschaltet sind und wobei die Spulen beim Empfänger parallel miteinander und mit einem Abschlusswiderstand in Serie geschaltet sind. Damit die Einrichtung zur drahtlosen elektrischen Energieübertragung mit einer Erhöhung des Wirkungsgrades vervollkommnet wird, ist vorgesehen, dass die Sender- und die Empfängerantennen für die elektrische Energie als Induktionsspulen in Form von Pseudohemisphäre ausgebildet sind und helikoidale Wicklungen (Schraubenwicklungen) aufweisen, dass die Senderantenne dabei mit dem elektrischen Stromerzeuger und einer Erdung in Serie geschaltet ist und dass die Empfängerantenne dabei in Serie mit dem Abschlusswiderstand und der Erdung geschaltet ist.

Energiemäßig räumlich geschlossenes (isoliertes) System

Fig. 6

Printed by Jouve, 75001 PARIS (FR)

EP 2 187 501 A1

## EP 2 187 501 A1

**Beschreibung**

Die Erfindung betrifft eine Einrichtung zur drahtlosen elektrischen Energieübertragung nach dem Oberbegriff des Anspruchs 1,

Die Erfindung kann im Bereich der Radiotechnik eingesetzt werden und kann dabei in der Elektrizitätswirtschaft angewendet werden. Die Erfindung kann kostspielige Fernleitungen ersetzen und folgende Aufgaben lösen:

a) die Überwindung von naturgegebenen Hindernissen (wie etwa Flüsse, Gebirge usw.), die den elektrischen Fernleitungen im Wege liegen;

b) eine drahtlose Stromversorgung von Wohn- und Industrieanlagen, Fahrzeugen und Beleuchtungseinrichtungen usw.

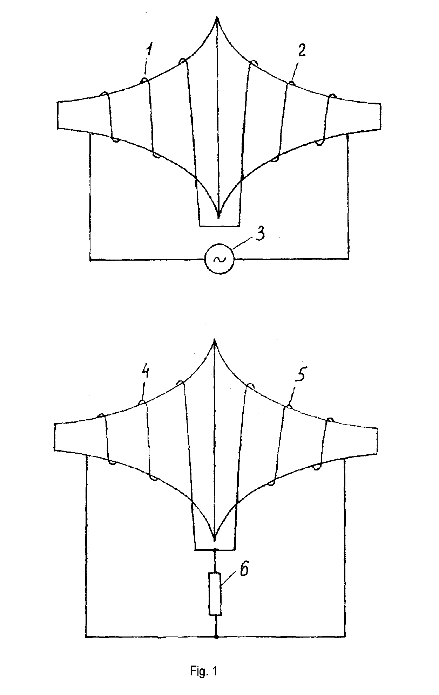

Fig. 1 zeigt eine schematische Darstellung einer bekannten "Einrichtung zur drahtlosen elektrischen Energieübertragung". Die Originalbezeichnung dieser Einrichtung heißt

"Пристрій передачі електроенергії через вільний простір"

(PPEE) [1]. Diese bekannte Einrichtung weist einen Sender (Strahler) für elektrische Energie auf. Der Sender besteht aus den Spulen 1 und 2 mit helikoidalen Rechts- und Linkswicklungen. Die Spulen sind untereinander sowie mit einem elektrischen Stromerzeuger 3 in Serie geschaltet. Die Einrichtung weist auch einen Empfänger (Verbraucher) für elektrische Energie auf. Der Empfänger besteht aus den Spulen 4 und 5, die ebenfalls helikoidale Rechts- und Linkswicklungen aufweisen und miteinander sowie mit einem Abschlusswiderstand 6 parallel geschaltet sind. Die Spulen 1, 2 und 4, 5 haben die Form einer Pseudohemisphäre. Es gibt auch funktionelle Übertragungs- und Empfangsantennen in Form von Pseudosphären.

In der bekannten Einrichtung zur drahtlosen elektrischen Energieübertragung wird die Sendeantenne in Form von Pseudosphären mit einem elektrischen Halbwellendipol ($\lambda$/2) und die Empfangsantenne mit einem magnetischen Halbwellendipol ($\lambda$/2) identifiziert. Dabei basiert die festgestellte Identifikation auf versuchsweise geprüften jedoch geradlinigen Antennen mit Ferritkernen und einer gleichen Einfügung des elektrischen Stromerzeugers und des Abschlusswiderstands in die Spulen wie in [1]. Das heißt, es gibt theoretische Erwartungen, dass die Kombination von allgemein bekannten elektrischen und magnetischen Antennen (Dipolen) [2] mit ihrer ungewöhnlichen Pseudosphärenform in einer Einrichtung zur drahtlosen elektrischen Energieübertragung eine elektromagnetische Resonanzverbindung ($K_{EH}$) zwischen der Sende- und der Empfangsantenne der Einrichtung zur drahtlosen elektrischen Energieübertragung mit einem Wirkungsgrad von ca. Eins ($K_{EH} \approx 1$) sicherstellt. Somit wird auch die Übertragung der elektrischen Energie über den Freiraum (also drahtlos) mit einem Wirkungsgrad von ca. Eins (Wirkungsgrad $\approx 1$) sichergestellt. Jedoch sind die genannten theoretischen Erwartungen während der Experimentalforschungen der bekannten Einrichtung zur drahtlosen elektrischen Energieübertragung mit Antennen in Form von Pseudosphären nicht gerechtfertigt.

Somit sind die Hauptmängel der bekannten Einrichtung zur drahtlosen elektrischen Energieübertragung ihre Betriebsunfähigkeit und ihre gewerbliche Unanwendbarkeit.

Es ist Aufgabe der Erfindung, die bekannte Einrichtung zur drahtlosen elektrischen Energieübertragung zu vervollkommnen.

In dieser Einrichtung ermöglicht es die neue Ausführung der Geometrie von Sende- und von Empfangsantenne und ihrer Schaltschemata mit dem elektrischen Stromerzeuger und dem Abschlusswiderstand, eine elektromagnetische Resonanzverbindung der Sende- und der Empfangsantenne von ca. Eins ($K_{EN} \approx 1$) sicherzustellen. Dadurch wird eine drahtlose Übertragung der elektrischen Energie vom elektrischen Stromerzeuger zum Abschlusswiderstand mit einem Wirkungsgrad von ca. 1 sichergestellt.

Die gestellte Aufgabe wird durch die Merkmale des Anspruchs 1 gelöst.

Die Einrichtung zur drahtlosen elektrischen Energieübertragung weist eine Sender- und eine Empfängerantenne für elektrische Energie auf. Die Antennen sind in Form von Pseudosphären ausgebildet. Auf die Pseudohemisphären der Antennen sind Induktionsspulen mit helikoidalen Rechts- und Linkswicklungen aufgewickelt. Beim Sender sind die Spulen untereinander und mit einem elektrischen Stromerzeuger in Serie geschaltet. Beim Empfänger sind die Spulen parallel miteinander und mit einem Abschlusswiderstand verbunden. Gemäß der Erfindung sind die Sender- und die Empfängerantenne der Einrichtung zur drahtlosen elektrischen Energieübertragung als Induktionsspulen in Form von Pseudohemisphäre ausgebildet und weisen helikoidale Wicklungen (Schraubenwicklungen) auf. Dabei werden die Senderantenne mit dem elektrischen Stromerzeuger und der Erdung und die Empfängerantenne mit dem Abschlusswiderstand und der Erdung in Serie geschaltet.

Die Erfindung wird anhand der Zeichnungen näher erläutert. Es zeigen:

Fig. 2      eine schematische Darstellung einer Einrichtung zur drahtlosen elektri- schen Energieübertragung,

Fig. 3 - 7      die Funktion der Einrichtung zur drahtlosen elektrischen Energieüber- tragung, wobei

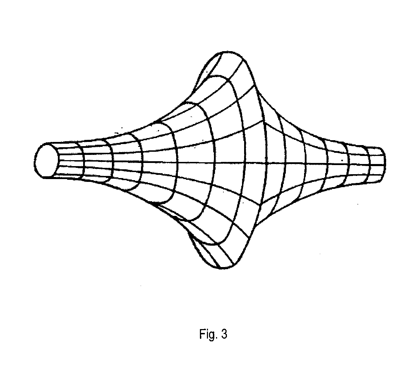

Fig. 3      die Pseudosphäre mit Parallelkreisen und Meridianen,

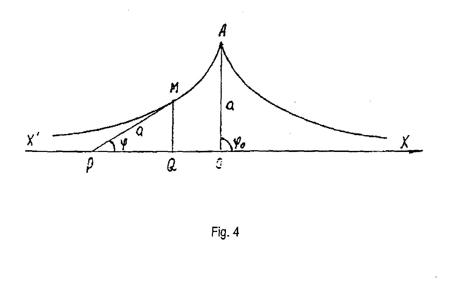

Fig. 4      die mittels Drehung gebildete Schleppkurve der Sphäre,

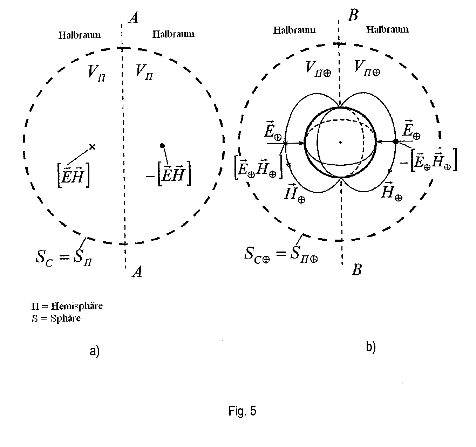

Fig. 5      die künstlichen und die naturgegebenen elektromagnetischen Felder darstellen. Die elektromagnetischen Felder wirken in der Einrichtung zur drahtlosen elektrischen Energieübertragung zusammen,

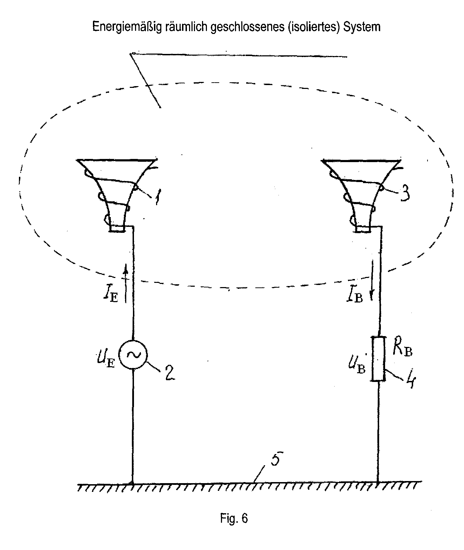

Fig. 6      die Spannungen und die Ströme in der Einrichtung zur drahtlosen elekt- rischen Energieübertragung und

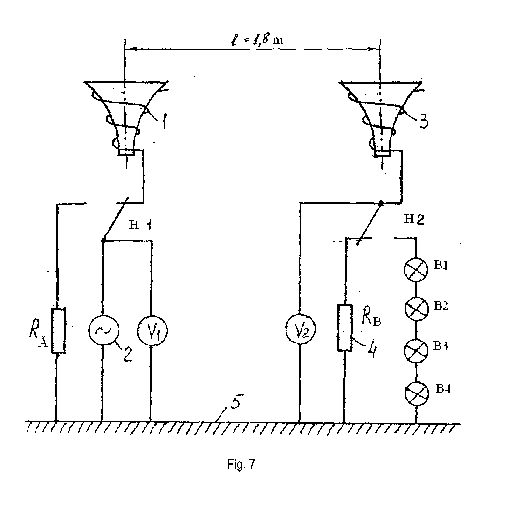

Fig. 7      die Anlage schematisch dargestellt. Mit dieser Anlage ist experimentell eine drahtlose Übertragung der elektrischen Energie mit einem Wir- kungsgrad von ca. 1 praktisch durchführbar.

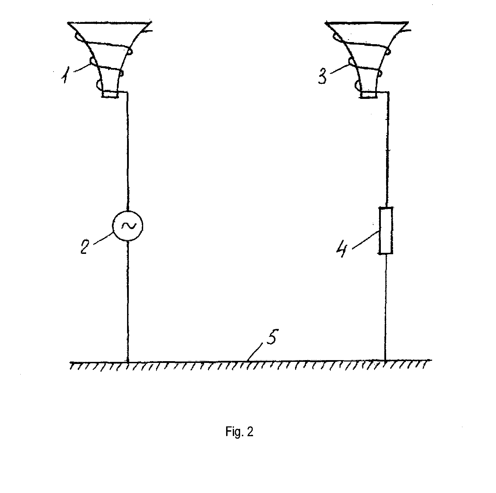

Die Einrichtung zur drahtlosen elektrischen Energieübertragung aus Fig. 2 enthält:

- einen Sender; seine Antenne 1 wirkt als Induktionsspule in Form einer Pseudohemisphäre. Die Antenne 1 des Senders ist mit einem elektrischen Stromerzeuger 2 in Serie geschaltet;
- einen Empfänger; seine Antenne 3 stellt auch eine Induktionsspule in Form einer Pseudohemisphäre dar. Die Antenne 3 des Empfängers ist mit einem Abschlusswiderstand 4 in Serie geschaltet.

Der elektrische Stromerzeuger 2 und der Abschlusswiderstand 4 sind mit der Erdung 5 verbunden.

Die Einrichtung zur drahtlosen elektrischen Energieübertragung funktioniert auf folgende Weise:

Die Pseudohemisphären als Form der Antennen der Einrichtung zur drahtlosen elektrischen Energieübertragung sind als Hälften der Pseudosphäre aus Fig. 3 erkennbar. Diese Pseudosphäre ist ihrerseits als Rotationskörper einer Schleppkurve rings um die Asymptote X'X aus Fig. 4 zu entnehmen. Die Schleppkurve (Traktrix) ist die geometrische Stelle der Punkte, welche eines der Enden eines Segments a hinterlässt, wenn sein zweites Ende sich entlang der Geraden X'X bewegt. AO = a ist die Höhe der Schleppkurve ($\varphi_0 = 90°$). M ist der Berührungspunkt mit der Schleppkurve des Segments MP = a ($\varphi < 90°$) [3, S. 822].

Die Pseudosphäre ist ein endlos entlang der Asymptote X'X gestreckter Körper. Es ist wesentlich, dass die endgültige Oberfläche ($S_n$) der Pseudosphäre der Oberfläche ($S_c$) mit einem Radius r = a gleich ist, und dass der endgültige Umfang ($V_n$) der Pseudosphäre dem Halbumfang dieser Sphäre $\left(\frac{1}{2}V_c\right)$ gleich ist, das heisst:

$$S_n = S_c = 4\pi a^2 = 4\pi r^2 \qquad (1)$$

$$V_n = \frac{1}{2}V_c = \frac{2}{3}\pi a^3 = \frac{1}{2}\left(\frac{4}{3}\pi r^3\right) \qquad (2)$$

[3, S. 827].

Bekanntlich ist die elektromagnetische Strahlungsleistung (P) durch eine abgeschlossene Oberfläche pro Zeiteinheit durch folgende Formel berechnet:

$$\vec{P} = \oint_S \vec{W} d\vec{S} = \oint_S \left[\vec{E}\vec{H}\right] d\vec{S}, \qquad (3)$$

wobei $\vec{W} = \left[\vec{E}\vec{H}\right]$ der Vektor der Raumdichte des elektromagnetischen Energiestroms also des Poyntingschen Vektors und $d\vec{S}$ das Flächenelement S der abgeschlossenen Oberfläche [4, S. 101] ist. Mit Rücksicht darauf, dass

$$E = \frac{H}{120\pi},$$

wobei 120 $\Pi$ = 377 Ohm = der Wellenwiderstand des Freiraums ist, und dass für die Sphäre

$$\oint_S dS = 4\pi r^2,$$

aufgrund von (3) Folgendes resultiert:

$$E = \frac{\sqrt{30P}}{r} \tag{4}$$

[4, S. 102].

Die Formel (4) ist die Basisformel für die Berechnungen der elektrischen Feldstärke E in der Praxis einer Funkverbindung bei vorgegebenen P- und r-Werten.

Unter Berücksichtigung der Gleichung (1) gilt die Formel (4) für die Oberfläche sowohl in Form einer Sphäre als auch in Form einer Pseudosphäre. Die neuen Möglichkeiten kommen auf, wenn in Übereinstimmung mit dem Theorem von Ostrogradsky-Gauß die Abhängigkeit (3) mit den Umfängen (2) verknüpft wird, das heißt:

$$P = \oint_{S=S_c=S_n}\left[\dot{\vec{E}}\vec{H}\right]dS = \int_{V_c} div\left[\vec{E}\vec{H}\right]dV = 2\int_{V_n} div\left[\vec{E}\vec{H}\right]dV_n \quad \begin{matrix} \neq 0, \\ = 0. \end{matrix} \tag{5}$$

Die Abhängigkeit (5) wird in zwei Varianten betrachtet:

1) die Bestandteile der Abhängigkeit (5) sind ungleich Null; dabei kennzeichnen sie ein energiemäßig offenes System (ihre Folge ist dann das Ergebnis von (4));

2) die Bestandteile der Abhängigkeit (5) sind gleich Null; dabei kann der mit den Umfängen der Pseudosphäre zusammenhängende Bestandteil ein energiemäßig geschlossenes (isoliertes) System kennzeichnen; die Abläufe in diesem System werden durch folgende Gleichung festgelegt:

$$\int_{V_n} div\left[\vec{E}\vec{H}\right]dV_n\Big|_{\frac{1}{2}S} = -\int_{V_n} div\left[\vec{E}\vec{H}\right]dV_n\Big|_{\frac{1}{2}S}, \tag{6}$$

Mit dem Index ½ S sind hier die Hälften der Fläche $S = S_c = S_n$ gekennzeichnet. Diese Fläche weist zwei Umfänge $V_n$ innerhalb des Umfangs $V_c$ aus, jeweils (1) und (2) (Fig. 5a).

Die Gleichung (6) beschreibt die innere Resonanzbilanz der elektromagnetischen Energie im geschlossenen System mit dem Umfang $V_c$. Zwei Ströme der elektromagnetischen Energie bewegen sich in diesem System einander entgegen [5, S. 627]. Ausgerechnet in diesem System ist die Gleichung $K_{EH} = 1$ zwischen dem einfallenden und dem Rückstrom der elektromagnetischen Energie möglich. Jedoch stellen die Sende- und die Empfangsantennen gemäß der Erfindung und Fig. 2 keine Pseudosphären sondern Pseudohemisphären dar. Deswegen müssen die Zahlenfaktoren in der Gleichung (6) durch zwei dividiert werden, das heißt:

$$\frac{1}{2}\int_{V_n} div\left[\vec{E}\vec{H}\right]dV_n\Big|_{\frac{1}{4}S} \neq -\frac{1}{2}\int_{V_n} div\left[\vec{E}\vec{H}\right]dV_n\Big|_{\frac{1}{4}S}, \tag{7}$$

Das Ungleichheitszeichen $\neq$ zeigt, dass das System Sender - Empfänger dabei zu einem energiemäßig offenen System wird. Folglich ist in diesem System $K_{EH} \neq 1$.

Diese Tatsache gibt Anstoß zur Erkennung und Suche nach einem elektromagnetischen Vermittlungselement. Dieses Vermittlungselement müsste den Raum zwischen der Sende- und der Empfangsantenne der Einrichtung zur drahtlosen elektrischen Energieübertragung energiemäßig abschließen. Als solches zweifelloses Vermittlungs-element dient das elektrische und das magnetische Feld der Erde, welches zwischen der Sende- und der Empfangsantenne der Einrichtung zur drahtlosen elektrischen Energieübertragung verwendbar ist.

Fig. 5b zeigt die schematische Darstellung dieser Felder in der Funktion der Vermittlungselemente. Hier sind ebenfalls die Umfänge und die Oberflächen der Pseudosphären im Verhältnis zum Umfang und zur Fläche der Sphäre rings um die Erde angegeben.

Unter Berücksichtigung des Schriftstücks [6] werden jeweils das elektrische und das magnetische Feld der Erde in der Dynamik (ähnlich wie in (6)) durch die folgende Gleichung dargestellt:

$$\int_{V_{n\oplus}} div\left[\vec{E}_{\oplus}\vec{H}_{\oplus}\right]dV_{n\oplus}\Big|_{\frac{1}{2}S_{\oplus}} = -\int_{V_{n\oplus}} div\left[\vec{E}_{\oplus}\vec{H}_{\oplus}\right]dV_{n\oplus}\Big|_{\frac{1}{2}S_{\oplus}}. \qquad (8)$$

Für den nächsten Schritt muss auf zwei Faktoren hingewiesen werden:

1. Es ist bekannt, dass die Volumendifferenzierung der Größen ihren Zustand in einem Raumpunkt (innerhalb des Mikrovolumens) beschreibt [7, S. 541]. Das betrifft auch die Divergenz (der Quelle) der elektromagnetischen Energie von den Bestandteilen der Ungleichung (7), welche auch durch die Wirbel (rot, Rotor) des elektrischen und des magnetischen Felds begleitet wird, das heißt

$$div\left[\vec{E}\vec{H}\right] = \vec{H}\,rot\,\vec{E} - \vec{E}\,rot\,\vec{H}. \qquad (9)$$

Die Gleichung (9) beschreibt den Zustand der elektromagnetischen Wellen (Quanten) innerhalb des Längenbereichs von Röntgen- und Infrarotwellen (also ab Mikrowellen) bis zu Längswellen (also bis Megawellen). Die Röntgen- und Infrarotwellen sind fähig, die Moleküle und die Atome der Umwelt zu ionisieren. Folglich können sie die Wirkung des elektrischen (und magnetischen) Felds der Erde [5, S. 86] aufweisen. Das betrifft auch die Bestandteile der Gleichung (8), welche den Zustand der mit der Erde verbundenen elektromagnetischen Wellen (Quanten) beschreibt. 2. Es ist zweifellos, dass bei beliebigen Umständen sich sowohl die Sende- als auch die Empfangsantenne der Einrichtung zur drahtlosen elektrischen Energieübertragung an einer Seite der Erde befinden.

Der erste Faktor legt einen Zusammenhang zwischen den Bestandteilen der Ungleichung (7) und der Gleichung (8) fest. Der zweite Faktor bekräftigt den Zusammenhang der Bestandteile der Ungleichung (7); dieses kann nur mit einem Bestandteil (der Hälfte) der Gleichung (8) erfolgen, welcher in zwei Teile zwischen den Bestandteilen der Ungleichung (7) geteilt wird. Mit Rücksicht auf die zwei oben genannten Faktoren und aufgrund von (7) und (8) ergibt sich im Endeffekt die folgende Gleichung:

$$\frac{1}{2}\int_{V_n} div\left[\vec{E}\vec{H}\right]dV_n\Big|_{\frac{1}{4}S} - \frac{1}{2}\int_{V_{n\oplus}} div\left[\vec{E}_{\oplus}\vec{H}_{\oplus}\right]dV_{n\oplus}\Big|_{\frac{1}{4}S_{\oplus}} =$$

$$= \frac{1}{2}\int_{V_{n\oplus}} div\left[\vec{E}_{\oplus}\vec{H}_{\oplus}\right]dV_{n\oplus}\Big|_{\frac{1}{4}S_{\oplus}} - \frac{1}{2}\int_{V_n} div\left[\vec{E}\vec{H}\right]dV_n\Big|_{\frac{1}{4}S}, \qquad (10)$$

Da aufgrund von (2) folgende Gleichheit vorliegt:

$$\frac{1}{2}V_n = \frac{1}{4}V_c,$$

wird die Gleichung (10) auf folgende Art zurückgeführt:

$$\frac{1}{4}\int_{V_c} div\left[\vec{E}\vec{H}\right]dV_c\bigg|_{\frac{1}{4}S} - \frac{1}{4}\int_{V_{c\oplus}} div\left[\vec{E}_\oplus \vec{H}_\oplus\right]dV_{c\oplus}\bigg|_{\frac{1}{4}S_\oplus} =$$

$$= \frac{1}{4}\int_{V_{c\oplus}} div\left[\vec{E}_\oplus \vec{H}_\oplus\right]dV_{c\oplus}\bigg|_{\frac{1}{4}S_\oplus} - \frac{1}{4}\int_{V_c} div\left[\vec{E}\vec{H}\right]dV_c\bigg|_{\frac{1}{4}S}. \qquad (11)$$

Die Gleichung (10) und ihr Äquivalent (11) beschreiben ein energiemäßig geschlossenes System, weil ihre linken und rechten Teile, gemäß (1) und (2), die Hälften der Sphärenumfänge sind. Diese sind durch die Hälften der Flächen der Sphäre begrenzt. Dadurch wird behauptet, dass zwischen den Hälften dieses Systems eine elektromagnetische Verbindung mit dem Faktor $K_{EH} = 1$ vorliegt und dass die Energieübertragung mit dem Wirkungsgrad von ca. 1 möglich ist.

Tatsächlich gibt es in diesem geschlossenen System künstlich erzeugte ($div_L \overline{EH}$) und naturgegebene ($div_L \vec{E}_\oplus \vec{H}_\oplus$) Ströme der elektromagnetischen Energie. Diese Ströme weisen am Anschluss des linken und des rechten Teils der Gleichung (11) den Zustand eines Resonanzgleichgewichts auf. Dabei wird dieses Resonanzgleichgewicht auch dann nicht gestört, wenn der linke Teil der Gleichung (11) mit einer Energiequelle ergänzt und wenn diese Energie aus dem rechten Teil entfernt (verwertet) wird. Das kommt gerade in der Einrichtung zur drahtlosen elektrischen Energieübertragung zustande. Die Energie $div_L \overline{EH}$ wird vom Erzeuger 2 über die Antenne 1 in das energiemäßig geschlossene System (11) eingeführt. Über die Antenne 3 wird am Abschlusswiderstand 4 diese Energie hinausgeleitet. Dabei ist die Energie ($div_L \vec{E}_\oplus \vec{H}_\oplus$) nur der Energieüberträger ($div_L \overline{EH}$). Das heißt, pro eine Zeiteinheit wird die Energie vom Erzeuger 2 durch die Leistung

$$P_E = U_E I_E$$

und am Abschlusswiderstand 4 durch die Leistung

$$P_B = U_B I_B$$

festgelegt. Das ergibt folgende Gestaltung der Gleichung (12):

$$P_E = U_E I_E \rightarrow \frac{1}{4}\int_{V_c} div\left[\vec{E}\vec{H}\right]dV_c\bigg|_{\frac{1}{4}S} - \frac{1}{4}\int_{V_{c\oplus}} div\left[\vec{E}_\oplus \vec{H}_\oplus\right]dV_{c\oplus}\bigg|_{\frac{1}{4}S_\oplus} =$$

$$= \frac{1}{4}\int_{V_{c\oplus}} div\left[\vec{E}_\oplus \vec{H}_\oplus\right]dV_{c\oplus}\bigg|_{\frac{1}{4}S_\oplus} - \frac{1}{4}\int_{V_c} div\left[\vec{E}\vec{H}\right]dV_c\bigg|_{\frac{1}{4}S} \rightarrow P_B = U_B I_B \qquad (12)$$

Dies ist in Fig. 6 abgebildet.

Das Resonanzsystem wird durch die Abhängigkeit (12) beschrieben. Die Energieverluste in einem solchen Resonanzsystem sind äußerst gering, weil der Strahlungswiderstand der Antennen und der Wellenwiderstand des Übertragungskanals zwischen den Antennen die Funktionen der Raumkennlinien (dreidimensionalen Kennlinien) der Antennen, der Länge der Welle und des Mediums (Vakuum) sind. Das heißt, sie sind nicht aktiv [2].

Deswegen ist der

$$Wirkungsgrad = \frac{P_{Ein}}{P_{AW}} \approx 1,$$

was durch ein Experiment nachgewiesen wird.

In Fig. 7 ist die Anlage zur drahtlosen Übertragung der elektrischen Energie abgebildet. Die Antennen 1 und 3 sind identisch. Sie haben folgende Kenndaten: a = 10 cm, $x_1$ = a = 10 cm (Fig. 4) und eine Windungszahl - 375 des

Drahtes

ПЭЛШО

-0,23. Die Messungen haben gezeigt, dass jede dieser Antennen eine Induktivität L ≈ 11 mH aufweist und auf der Frequenz f = 600 kHz ($\lambda$ = 500 m) mitschwingt. Die anhand der Formel

$$f = \frac{1}{2\pi\sqrt{LC}}$$

berechnete eigene (geometrische, "Neben-") Kapazität betrug C = 5 pF. Der Abstand zwischen den Antennen 1 und 3 betrug I = 1,8 m. (Der I-Wert ist eine Berechnungsgröße). Die Voltmesser V1 und V2 erfassen die Spannungen am Ausgang des Erzeugers 2 ($U_E$) und am Abschlusswiderstand 4 ($U_B$). Der Schalter S1 ermöglicht es, den Erzeuger 2 entweder an die Antenne 7 oder an den gleichwertigen Widerstand R3 anzuschalten. Der Schalter S2 ermöglicht die Zuschaltung entweder an die Antenne 3 oder an den Abschlusswiderstand 4 oder an vier Glühlampen H1-H4 mit je 26 V 0,12 A (Leistung P = 4 x 26 x 0,12 = 12,48 W) zur sichtbaren Anzeige.

Die Messungen haben gezeigt, dass der Erzeuger 2 sowohl bei einer drahtlosen elektrischen Energieübertragung (Schalter S1 und S2 in der Position aus Fig. 7) als auch beim Ersatzwiderstand-Betrieb (äquivalenter Widerstand $R_Ä$) (Schalter S1 in der Einschaltposition $R_Ä$) gleich belastet wird.

Da

$R_Ä = R_B$ = 1000 Ohm, ergibt das eine Gleichheit der Ströme
$I_E = I_B = I_Ä$
und der Spannungen
$U_E = U_B = U_Ä$ = 100 V.

Im Endeffekt ergeben die Ergebnisse des Versuchs eine Gleichheit der Leistungen

$$P_E = U_E I_E = \frac{U_E^2}{R_Ä} = P_B = U_B I_B = \frac{U_B^2}{R_B} = \frac{100^2}{1000} = 10 \text{ W}$$

und folglich eine Größe für den

$$\text{Wirkungsgrad} = \frac{P_B}{P_E} \approx \frac{10 \text{ W}}{10 \text{ W}} = 1$$

Somit ist die Betriebsfähigkeit (die gewerbliche Anwendbarkeit) der vorgeschlagenen Einrichtung zur drahtlosen elektrischen Energieübertragung gegenüber der bekannten Einrichtung zur drahtlosen elektrischen Energieübertragung [1] experimentell nachgewiesen.

Es ist auch eine effiziente Betriebsfähigkeit der Einrichtung zur drahtlosen elektrischen Energieübertragung beim Ersatz der Erdung durch die Gegengewichte (Metallplatten mit der Fläche von ca. 0,5 m$^2$ usw.) nachgewiesen. Die Funktionen der Gegengewichte können auch als Gehäuse des elektrischen Stromerzeugers und des Abschlusswiderstands dienen. Dies wurde während des Versuchs bestätigt.

Theoretisch sind die Verfahren zur Verringerung der Resonanzfrequenz, zur Erhöhung der Leistung und der Weite für die drahtlose elektrische Energieübertragung entwickelt worden.

Literaturverzeichnis

1. V.G. Kryuk, V.A. Yatsishin, M.M. Beldiy

(Крюк В.Г., Яцишин В. А., Бельдій

М.М.) "Пристрій передачі електроенергії через вільний простір",

, Patent UA Nr. 78002, Informationsblatt Nr. 2, 2007.
2. H. Meineke, F.V. Gundlach

(Мейнке Х., Гундлах Ф.В.)

"Handbuch für Radiotechnik", Band 1, M-L, Gosenergoizdat, 1961.
3. M. Ya. Vygodsky

(Выгодский М.Я.)

"Handbuch für Mathematik", M. Nauka, 1963.
4. A.M. Katushev, N.S. Golubeva

(Катушев А.М., Голубева Н.С.)

Grundlagen der Radioelektronik

("Основы радиоэлектроники"),

, M. Energia, 1969.
5. D.V. Sivukhin

(Сивухин Д.В.)

Allgemeine Physik

("Общий курс физики"),

, Band III, M. Nauka, 1977.
6. V.G. Kryuk

(Крюк В. Г.)

Natürliches Einheitensystem auf Grundlage der Einheiten der natürlichen Zeit

("Естественная система единиц на базе единиц

естественного времени"),

, Kiev, Khagar, 2001.
7. N.N. Bronstein, K.A. Semendyaev

(Бронштейн Н.Н., Семендяев К. А.)

Handbuch für Mathematik, M. Nauka, 1964.

**Patentansprüche**

1. Einrichtung zur drahtlosen elektrischen Energieübertragung mit Sender- und Empfängerantennen (1 und 3) für elektrische Energie, wobei die Antennen (1 und 3) in Form von Pseudosphären ausgebildet sind, auf deren Pseudohemisphären Induktionsspulen mit helikoidalen Rechts- und Linkswicklungen aufgewickelt sind; wobei die Spulen beim Sender (1) untereinander und mit einem elektrischen Stromerzeuger (2) in Serie geschaltet sind und wobei die Spulen beim Empfänger parallel miteinander und mit einem Abschlusswiderstand (4) geschaltet sind,
   **dadurch gekennzeichnet,**
   **dass** die Sender- und die Empfängerantenne (1 und 3) für die elektrische Energie als Induktionsspulen in Form von Pseudohemisphäre ausgebildet sind und helikoidale Wicklungen (Schraubenwicklungen) aufweisen,
   **dass** die Senderantenne (1) dabei mit dem elektrischen Stromerzeuger (2) und einer Erdung (5) in Serie geschaltet ist und
   **dass** die Empfängerantenne (3) dabei in Serie mit dem Abschlusswiderstand (4) und der Erdung (5) geschaltet ist.

2. Einrichtung nach Anspruch 1,
   **dadurch gekennzeichnet,**
   **dass** die Funktionen der Erdung (5) im Sender und im Empfänger für die elektrische Energie durch Gegengewichte erfüllt sind.

3. Einrichtung nach Anspruch 2,
   **dadurch gekennzeichnet,**
   **dass** die Funktionen der Gegengewichte im Sender und im Empfänger für die elektrische Energie durch ein Gehäuse des elektrischen Stromerzeugers (2) und des Abschlusswiderstands (4) erfüllt sind.

4. Einrichtung nach Anspruch 2 und 3,
   **dadurch gekennzeichnet,**
   **dass** die Funktionen der Erdung (5) entweder im Sender oder im Empfänger für die elektrische Energie durch die Gegengewichte erfüllt sind, und zwar entweder durch das Gehäuse des elektrischen Stromerzeugers (2) oder durch das Gehäuse des Abschlusswiderstands (4).

Fig. 1

Fig. 2

Fig. 3

Fig. 4

Fig. 5

Energiemäßig räumlich geschlossenes (isoliertes) System

Fig. 6

Fig. 7

## INTERNATIONAL SEARCH REPORT

| International application No. |
|---|
| PCT/UA 2008/000044 |

**A. CLASSIFICATION OF SUBJECT MATTER**

H02J 17/00 (2006.01)

According to International Patent Classification (IPC) or to both national classification and IPC

**B. FIELDS SEARCHED**

Minimum documentation searched (classification system followed by classification symbols)

H02J 17/00, 7/00, 7/02, HO1Q 9/00, 9/04, 13/00-13/04, 19/00, 19/10-19/12

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | UA 76876 C2 (KRJUK VITALY GRIGOREVICH) 15.09.2006, p. 8, 9, lines 1-28, fig. 6-7 | 1<br>2-4 |
| Y | RU 2002122110 A (FRAKTUS, SA) 27.02.2004, the claims, p. 7 | 2 |
| Y | RU 2163046 C2 (VOISKOVAYA CHAST 35533) 10.02.2001, p.3, left column, lines 28-30 | 3-4 |
| A | UA 78002 C2 (KRJUK VITALY GRIGOREVICH et al.) 15.02.2007, mentioned in the description | 1-4 |
| A | UA 79626 C2 (KRJUK VITALY GRIGOREVICH) 10.07.2007 | 1-4 |
| A | RU 2143775 C1 (STREBKOV DMITRY SEMENOVICH et al.) 27.12.1999 | 1-4 |
| A | WO 2007/008646 A2 (MASSACHUSETTS INSTITUTE OF TECHNOLOGY) 18.01.2007 | 1-4 |

☐ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18 November 2008 (18.11.2008) | 27 November 2008 (27.11.2008) |

| Name and mailing address of the ISA/ | Authorized officer |
|---|---|
| RU | |
| Facsimile No. | Telephone No. |

Form PCT/ISA/210 (second sheet) (July 1998)